# EUROPÄISCHE PATENTSCHRIFT

(11) **EP 1 711 546 B1**
(45) Veröffentlichungstag und Bekanntmachung des Hinweises auf die Patenterteilung: **12.09.2007**
(21) Anmeldenummer: 05701100.9
(22) Anmeldetag: 21.01.2005
(51) Int. Cl.: C08G 18/02, C08G 18/18, C08G 18/79, C09D 127/06

(54) **MONOMERENARME, NIEDRIGVISKOSE LÖSUNGEN VON TDI-ISOCYANURATEN IN VERZWEIGTEN DIALKYLPHTHALATEN**
LOW-VISCOSITY SOLUTIONS OF TDI-ISOCYANURATES IN BRANCHED DIALKYLPHTHALATES, WITH A LOW MONOMER CONTENT
SOLUTIONS DE TDI-ISOCYANURATES DANS DES DIALKYLPHTHALATES RAMIFIES A FAIBLE VISCOSITE ET PAUVRES EN MONOMERES

(30) Priorität: 23.01.2004 DE 102004003794
(43) Veröffentlichungstag der Anmeldung: 18.10.2006
(73) Patentinhaber: LANXESS Deutschland GmbH, 51369 Leverkusen (DE)
(72) Erfinder: SIMON, Joachim, 40589 Düsseldorf (DE); BRAHM, Martin, 51519 Odenthal (DE); AUGUSTIN, Thomas, 51065 Köln (DE); KUCKERT, Eberhard, 51375 Leverkusen (DE)
(86) Internationale Anmeldenummer: PCT/EP2005/000577
(87) Internationale Veröffentlichungsnummer: WO 2005/070984

(56) Entgegenhaltungen:
- EP-A- 1 378 530
- DE-A1- 2 419 016
- DE-A1- 3 041 732
- DE-A1- 3 920 325
- DE-A1- 10 229 780
- US-A- 4 115 373

## Beschreibung

Die vorliegende Erfindung betrifft neue monomerenarme, niedrigviskose Lösungen von Diisocyanatotoluol basierten Isocyanato-Isocyanuraten in verzweigten Dialkylphthalaten als ökologisch akzeptablem Weichmacher für Polyvinylchlorid, ein Verfahren zur Herstellung dieser Lösungen sowie ihre Verwendung als haftverbessernde Zusätze für Beschichtungsmittel auf Basis von weichmacherhaltigem Polyvinylchlorid.

Bei der Beschichtung von Substraten mit Weich PVC oder PVC Plastisolen bedient man sich vorzugsweise isocyanatfunktioneller Haftvermittler auf Basis von Diisocyanatotoluol (siehe dazu: "Beschichten mit Kunststoffen", Carl Hanser Verlag, München, 1967 und Kunststoffe 68 (1978), S. 735 ff, S. 800 ff), die die Haftung zum Substrat über die Reaktion und Vernetzung der Isocyanatgruppen herstellen.

Für optimale Beschichtungsergebnisse ist die Homogenität des Plastisol-Polyisocyanat-Gemisches entscheidend. Da Polyisocyanate in der Regel sehr hochviskos oder sogar fest sind, kommen zur Verbesserung der Verarbeitbarkeit üblicherweise Lösemittel zum Einsatz, die vorzugsweise gleichzeitig als Weichmacher in der PVC basierten Beschichtung wirken und daher auch dort verbleiben können (H. Kittel, "Lehrbuch der Lacke und Beschichtungen" 2. Aufl. 1998, S. Hirzel Verlag Stuttgart, S. 342 ff. "Polyvinylverbindungen").

Bekannte Weichmacher für PVC Beschichtungen sind beispielweise Phthalsäureester, Adipinsäureester, Phosphorsäureester, Sebacinsäureester, Azelate oder modifizierte Öle. Auch Polyester werden als Weichmacher beschrieben ("Plasticizers" , Kulkarni, K. B. in Popular Plastics (1966), 11(6), 71-2).

Für derartige Haftvermittler werden neben guten Haftungseigenschaften, eine gute Verarbeitbarkeit, d.h. niedrige Viskosität (<20 000 mPas bei 23°C), niedriger Gehalt an freiem Diisocyanatotoluol (TDI) (≤ 0,2 % freies TDI), sowie Lösungsmittel, die nicht als "giftig" zu kennzeichnen sind, gefordert. Gute Haftungseigenschaften werden üblicherweise dann erhalten, wenn die Haftvermittler >25 Gew.-% Festkörper enthalten. Eine Kombination aller dieser Produkteigenschaften ist im existierenden Stand der Technik bisher nicht beschrieben.

Die DE-A 24 19 016 beschreibt Polyisocyanate gelöst in Plastifizierungsmitteln für PVC wie hochsiedenden Estern u.a. der Phthalsäure mit 7 - 9 C-Atomen im Alkoholrest. Als Katalysatoren für die Isocyanuratbildung werden in unspezifischen Listen u.a. auch tertiäre Amine genannt. Die geforderte Kombination der vorstehend beschriebenen Produkteigenschaften von Viskosität, Restmonomergehalt und Festkörpergehalt wird durch diese Systeme jedoch nicht erreicht.

Die US-A 4 115 373 beschreibt die Trimerisation von Isocyanaten wie u.a. Toluylendiisocyanat in inerten Lösemitteln eines breiten Siedepunktsbereichs unter Verwendung von Mannich-Basen als Katalysatoren. Die so hergestellten Polyisocyanate haben dabei einen Gehalt an freiem Monomer von ≤ 0,7 Gew.-%. Als Lösemittel w erden in unspezifischen Listen u.a. auch niedermolekulare Phthalsäureester wie Dibutylphthalat und Butylbenzylphthalat genannt. Die Herstellung von Toluylendiisocyanat-basierenden Isocyanuraten in PVC-Weichmachern mit der eingangs beschriebenen Eigenschaftskombination wird nicht offenbart.

Die DE-A 30 41 732 beschreibt Polyisocyanate, die auf der Basis von 4,4'-Diisocyanatodiphenylmethan und TDI aufgebaut werden. In Vergleichsbeispiel 17 werden auch Polyisocyanate auf Basis von TDI Gemischen mit Isomerengehalten von ca. 35 Gew.-% 2,6 Diisocyanatotoluol eingesetzt. Die erhaltenen Produkte erfüllen jedoch die geforderten Produkteigenschaften hinsichtlich des Festkörpergehaltes, der Viskosität und des Restmonomergehaltes an TDI nicht.

In der Patentanmeldung DE 10 229 780 wird ein Verfahren zur Herstellung von TDI- basierten Polyisocyanaten mit Restmonomergehalten < 0,2 Gew.-% beschrieben. Die Herstellung von weichmacherhaltigen Lösungen mit den geforderten niedrigen Viskositäten und mechanischen Eigenschaften wird jedoch nicht offenbart.

Aufgabe der vorliegenden Erfindung war es daher, neue Haftvermittler für PVC-Plastisole zur Verfügung zu stellen, die ökotoxikologisch akzeptabel sind (keine Kennzeichnung "giftig"), auf technisch verfügbaren preiswerten Weichmachern basieren und zu guten mechanischen Eigenschaften wie z.B. Schälfestigkeiten führen. In Folge dessen müssen die Festkörpergehalte dieser Haftvermittler bezogen auf das enthaltene Polyisocyanat >25 Gew.%, die Viskosität <20 000 mPas/23°C und der Gehalt an freiem TDI-Monomer bezogen auf alle Isomeren ≤0,2 Gew.-% betragen. Weiterhin dürfen die als Lösemittel verwendeten Weichmacher selbst nicht als "giftig" kennzeichnungspflichtig sein. Zudem soll das Polyisocyanat auf den großtechnisch verfügbaren Isomerenmischungen von 2,4- und 2,6- Diisocyanatotoluol, bevorzugt dem sogenannten Desmodur^{®} T80 der Bayer AG Leverkusen, DE basieren.

Diese Aufgabe wurde nun durch das nachfolgend näher beschriebene Verfahren gelöst.

Gegenstand der Erfindung ist ein Verfahren zur Herstellung von TDI-basierenden Isocyanuratpolyisocyanatlösungen, bei dem
A) in einem Lösungsmittel, welches mindestens einen Phthalsäuredialkylester mit verzweigten Alkylresten enthält
B) Isomerenmischungen von Toluylendiisocyanat mit < 35 Gew.-% 2,6-Toluylendiisocyanat
C) in Gegenwart eines Katalysators, der mindestens eine Stickstoffbase vom Typ einer Mannichbase enthält und
D) in strikter Abwesenheit von aliphatischen Hydroxyl- und/oder Urethangruppenhaltigen Verbindungen

so lange trimerisiert werden, bis der Gehalt an freien, nicht trimerisierten TDI-Restmonomeren ≤0,2 Gew.-% und gleichzeitig die Viskosität bei 23°C <20 000 mPas und der Festkörpergehalt bezogen auf das enthaltene Isocyanurat-Polyisocyanat > 25 Gew.-% beträgt.

Ein weiterer Gegenstand der Erfindung sind die nach dem erfindungsgemäßen Verfahren erhältlichen TDI-basierenden Isocyanuratpolyisocyanatlösungen mit einer Viskosität bei 23°C von <20 000 mPas, einem Gehalt an freien nicht trimerisierten TDI-Restmonomeren von ≤ 0,2 Gew.-% und einem Festkörpergehalt bezogen auf das enthaltene Isocyanurat-Polyisocyanat von >25 Gew.%.

Da der Verlauf der Trimerisierungsreaktion nicht nur vom Katalysator, sondern auch beispielsweise durch das eingesetzte Lösemittel, die Isomerenzusammensetzung des TDI oder gleichzeitig anwesende beispielsweise hydroxylgruppenhaltiger Verbindungen beeinflusst wird, war es nicht zu erwarten, dass gerade die erfindungswesentliche Kombination von Lösemittel, Katalysator und Höchstmenge an 2,6-TDI bei gleichzeitiger Abwesenheit von Hydroxyverbindungen Haftvermittler mit den geforderten Eigenschaften liefern würde.

Bevorzugt werden in Komponente A) als verzweigte Dialkylphthalate isomere Diisononylphthtalate, besonders bevorzugt solche mit einem Siedepunkt bei 1013 mbar von mindestens 250°C verwendet, die bei Raumtemperatur flüssig sind.

Unter Diisononylphthalat werden üblicherweise Diester der Formel (I) verstanden, 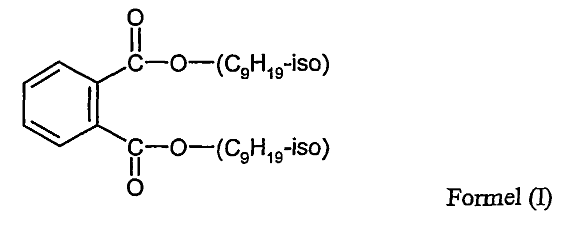 wobei dessen verzweigte Alkylketten (iso-C₉H₁₉) nicht genauer definiert sind.

Derartige Diisononylphthalate (DINP) sind unter anderen unter den nachstehenden Handelsbezeichnungen kommerziell erhältlich: Palatinol^{®} N (BASF, Ludwigshafen DE), Diplast^{®} NS (Lonza, Basel, CH), Jayflex^{®} DINP (Phthalsäurediester mit verzweigten C₈-C₁₀-Alkylgruppen, wobei ein hoher Anteil an C₉-Gruppen vorliegt; Exxon-Mobil Chemical Houston, USA) oder Vestinol^{®} 9 DINP (Oxeno Olefinchemie GmbH, Marl, DE).

Bevorzugte Diisononylphthalate sind Jayflex^{®} DINP und Vestinol^{®} 9 DINP, besonders bevorzugt ist Vestinol^{®} 9 DINP.

Bevorzugt werden in A) ausschließlich Phthalate der vorstehend genannten Art als Lösungsmittel verwendet.

In Komponente B) werden typischerweise binäre Gemische aus Diisocyanatotoluol-Isomeren verwendet. Bevorzugt enthalten diese Isomerenmischungen 2,4-Diisocyanatotoluol im Gemisch mit 5 bis 25 Gew.-% 2,6-Diisocyanatotoluol, bezogen auf das Gesamtgemisch. Besonders bevorzugt enthält die TDI-Isomerenmischung 2,4-Diisocyanatotoluol im Gemisch mit 15-25 Gew.-% 2,6-Diisocyanatotoluol. Ein Beispiel für dieses besonders bevorzugt einzusetzende TDI-Isorneremnischung ist das kommerziell bei der Bayer AG, Leverkusen, DE erhältliche Desmodur^{®} T80.

Der Trimerisierungskatalysator C) enthält Stickstoffbasen vom Mannich-Typ (β-Aminocarbonylverbindungen).

Dies sind vorzugsweise solche der an sich bekannten Art auf Basis von Phenolen, wie sie in bekannter Weise durch Mannich-Reaktion (R. Schröter: Houben-Weyl, Meth. d. org. Chemie 11,1 S. 756 ff (1957)) von Phenolen mit Aldehyden, vorzugsweise Formaldehyd und sekundären Aminen, vorzugsweise Dimethylamin, erhalten werden, wobei durch geeignete Wahl der Molverhältnisse der Ausgangsprodukte ein- oder mehrkernige Mannich-Basen mit mindestens einer Dialkylaminobenzylgruppe im Molekül neben phenolisch gebundenen Hydroxylgruppen erhalten werden. Zur Herstellung der erfindungsgemäß bevorzugten Mannich-Basen gelangen pro Mol Phenol im Allgemeinen ein bis drei Mol Aldehyd und ein bis drei Mol sekundäres Amin zum Einsatz.

Geeignete Phenole zur Herstellung der erfindungsgemäß bevorzugt einzusetzenden Mannich-Basen sind ein- oder mehrwertige Phenole mit mindestens einer gegenüber Formaldehyd kondensationsfähigen CH-Bindung in o- und/oder p-Stellung zu den phenolischen Hydroxylgruppen. Beispiele sind Phenole wie z.B. Kresole, Xylenole, Dihydroxylbenzole, Nonylphenole, Nonylkresole, tert.-Butylphenole, Isodecylphenole, Äthylphenole usw..

Die eingesetzten Phenole können auch durch Substituenten wie Chlor oder Brom substituiert sein. Anstelle dieser einkernigen Phenole können auch mehrkernige Phenole wie 4,4'-Dihydroxydiphenylmethan, Tetrachlor- und Tetrabrom-4,4'-dihydroxy-diphenylmethan, Tetrachlor- und Tetrabrom-4,4'-dihydroxy-diphenylmethan, 4,4'-Dihydroxydiphenyl oder 2,4-Dihydroxcydiphenylmethan verwendet werden. Als Aldehyd wird vorzugsweise Formaldehyd in Form einer wässrigen Formalinlösung oder als Paraformaldehyd oder Trioxan eingesetzt. Mannich-Basen, die mit anderen Aldehyden wie z.B. Butylaldehyd oder Benzaldehyd hergestellt werden, sind für das erfindungsgemäße Verfahren ebenfalls geeignet. Bevorzugtes sekundäres Amin ist Dimethylamin. Andere sekundäre aliphatische Amine mit C₁-C₁₈-Alkylresten wie z.B. N-Methylbutylamin, cycloaliphatische sekundäre Amine der Formel HN(R₁)R₂ (R₁=C₁-C₄-Alkyl, R₂=C₅-C₇-Cycloalkyl) wie z.B. N-Methylcyclohexylamin oder auch heterocyclische sekundäre Amine wie z.B. Piperidin, Pyrolidin oder Morpholin sind zur Herstellung der erfindungsgemäß einzusetzenden Mannich-Basen jedoch ebenfalls geeignet.

Mannich-Basen auf Basis anderer C-H-aciden-Verbindungen, beispielsweise auf Basis von Indol für das erfindungsgemäße Verfahren ebenfalls geeignet, jedoch weniger bevorzugt.

Bevorzugt werden ausschließlich Mannich-Basen der vorstehend genannten Art in C) als Katalysatoren eingesetzt.

Die Trimerisierungskatalysatoren der Komponente C) werden beim erfindungsgemäßen Verfahren in Mengen von 0,001 bis 5, vorzugsweise 0,01 bis 3 Gew.-%, bezogen auf das gesamte Diisocyanat-Gemisch eingesetzt.

Die Trimerisierung der Verbindungen der Komponente B) wird in Gegenwart der erfindungswesentlichen Lösungsmittelkomponente A) jedoch in strikter Abwesenheit von aliphatischen Hydroxylgruppen und Urethangruppen durchgeführt.

Die Trimerisierungsreaktion erfolgt im Temperaturbereich von 40 bis 140°C, vorzugsweise 40 bis 80°C, wobei die Trimerisierung durch thermische Zersetzung des Katalysators oder aber bevorzugt durch Zugabe eines Katalysatorengifts abgebrochen wird.

Für den Abbruch der Trimerisierungsreaktion geeignete Katalysatorengifte sind beispielsweise Säuren oder Säurederivate, wie Perfluorbutansulfonsäure, Propionsäure, die isomeren Phthalsäurechloride, Benzoesäure, Benzoylchlorid oder Quaternierungsmittel wie z.B. Toluolsulfonsäuremethylester. Auch Mono- oder Di-Phosphorsäureester sind hierzu geeignet.

In einer bevorzugten Ausführungsform des erfindungsgemäßen Verfahrens erfolgt die Trimerisierung des TDI aus B) unter den vorstehend genannten Bedingungen und unter Verwendung der vorstehend beschriebenen Komponenten A) und C), wobei die eingesetzte Menge der Komponente B) bereits der für das Endprodukt angestrebten TDI-basierenden Polyisocyanatmenge von >25 Gew.-% entspricht oder mehr TDI zu Anfang eingesetzt wird und der gewünschte Festkörper gehalt später während oder nach Abschluss der Trimerisation durch Zugabe von weiterem Lösemittel der Komponente A) eingestellt wird.

Bei der Durchführung des erfindungsgemäßen Verfahrens geht man in der Praxis typischerweise so vor, dass man eine Mischung der Komponente B) in dem Lösemittel A) bei Raumtemperatur oder bereits bei der vorgesehenen Reaktionstemperatur mit dem Katalysator, kontinuierlich oder gegebenenfalls portionsweise, versetzt und die Reaktionstemperatur durch die Geschwindigkeit der Katalysatorenzugabe oder durch externes Heizen bzw. Kühlen innerhalb der genannten Temperaturbereiche hält bis der NCO-Gehalt des Gemischs auf den Zielwert abgesunken ist. Anschließend wird die Reaktion vorzugsweise durch Zugabe eines Katalysatorengifts abgebrochen. Die Trimerisierung muss hierbei jedoch auf jeden Fall soweit geführt werden, bis der Gehalt an freien TDI-Monomeren in der Reaktionsmischung ≤ 0,2 Gew.-% liegt.

Auf diese Weise werden TDI-basierende Isocyanuratpolyisocyanatlösungen erhalten, die einen Gehalt an Isocyanurat-Polyisocyanat von mehr als 25 Gew.-%, bevorzugt von 25 bis 50 Gew.-%, besonders bevorzugt 26 bis 35 Gew.-% enthalten und gleichzeitig eine Viskosität bei 23°C von <20 000 mPas, bevorzugt <10 000 mPas und einen Restmonomergehalt von bevorzugt 0,005 - 0,2 Gew.-% aufweisen.

Die erfindungsgemäßen Lösungen sind klare, fast farblose Flüssigkeiten, die auch nach mehrwöchiger Lagerung weder zur Kristallisation noch zur Bildung von Ausfällungen oder Phasenseparation neigen. Außerdem zeichnen sie sich auch nach Lagerung durch einen äußerst geringen Gehalt an freiem TDI aus, was wegen des relativ niedrigen Siedepunktes dieses toxikologisch bedenklichen Diisocyanats ein besonderer Vorteil der erfindungsgemäßen Lösungen ist.

DE-A 24 19 016 des Standes der Technik enthält weder Angaben über die Verwendung von Mannichbasen zur Trimerisierung von TDI bzw. TDI-Isomerengemischen noch den Einsatz von verzweigten Dialkylphthalaten wie insbesondere den isomeren Diisononylphthalaten. Darüber hinaus weisen die nach DE-A 24 19 016 hergestellten Produkte bereits bei Feststoffgehalten ≤ 15 Gew.-% Viskositäten von 35 000 mPas/23°C auf. In wie weit sich die beschriebene Verfahrensweise zur Herstellung monomerenarmer Produkte mit ≤0,2 Gew.-% an freiem TDI eignet, ist nicht zu entnehmen. Dass sich die in DE-A 24 19 016 allgemein beschriebenen Lösemittel bzw. Weichmacher gar nicht zur Bereitstellung der hier erfindungswesentlich geforderten Eigenschaften selbst bei Verwendung von Mannichbasen und den erfindungsgemäß einzusetzenden TDI-Isomerengemischen eignen, wird durch die nachstehenden Vergleichsbeispiele 1-3 nachgewiesen.

In US-A 4 115 373 wird die TDI-Trimerisation in geeigneten PVC Weichmachern beschrieben, wobei ausschließlich isomerenreines 2,4-Diisocyanatotoluol verwendet wird. Aufgrund von Verträglichkeitsproblemen spezieller Haftvermittlerrezepturen sind derartige rein 2,4-TDI basierte Haftvermittler unvorteilhaft, so dass gerade der Einsatz von Isomerengemischen erwünscht ist. Dies wird jedoch in US-A 4 115 373 nicht beschrieben. Die Trimerisation von 2,4- und 2,6-TDI-Isomerenmischungen zur Herstellung monomerenarmer Polyisocyanate ist darüber hinaus nicht trivial, da sich beide Isomeren hinsichtlich der Trimerisierung unterschiedlich verhalten und 2,6-TDI dabei wenig selektiv reagiert. Ferner weisen die in US-A 4 115 373 beschriebenen Produkte bereits bei einem Restmonomergehalt von 0,7 Gew.-% Viskositäten von 400 000 mPas/20°C auf und sind damit weit von den erfindungsgemäß geforderten Eigenschaften entfernt.

Aus DE-A 3 041 732, Beispiel 17 ist die Trimerisation von TDI mit 35 Gew. % des 2,6-Isomers in Gegenwart von Mannichbasen in Dioctylphthalat beschrieben. Diese Produkte weisen jedoch bei einem Restgehalt von TDI von mehr als 0,4 Gew.-% und F estkörpergehalten von < 25 Gew.-% bereits Viskositäten von ca. 9000 mPas/23°C auf Eine weitere Trimerisation zur Absenkung des Restmonomergehaltes ≤0,2 Gew.-% würde zu drastischem Viskositätsanstieg führen, so dass Produkte außerhalb der erfindungswesentlichen Spezifikation erhalten werden würden. Diese Spezifikation kann nur durch den Einsatz verzweigt aliphatischer Dialkylphthalate, insbesondere Diisononylphthalat erreicht werden.

Die erfindungsgemäßen Lösungen eignen sich als Haftvermittler für Weich-PVC und insbesondere als haftvermittelnde Zusätze für PVC-Plastisole. Besonders vorteilhaft werden die erfindungsgemäßen Lösungen als Haftvermittler zwischen Substraten aus Chemiefasern mit gegenüber NCO-Gruppen reaktionsfähigen Gruppen wie z.B. Polyamid oder Polyesterfasern und PVC-Plastisolen bzw. Weich-PVC-Scbmelzen verwendet. Selbstverständlich kann mit den erfindungsgemäßen Lösungen auch die Haftung von Weich-PVC bzw. PVC-Plastisolen an flächigen Substraten, d.h. Folien verbessert werden.

Daher ist ein weiterer Gegenstand der vorliegenden Erfindung auch die Verwendung der erfindungsgemäßen Lösungen als haftverbessernde Zusatzmittel für Beschichtungsmittel auf Basis von weichmacherhaltigem Polyvinylchlorid.

Bei der erfindungsgemäßen Verwendung der erfindungsgemäßen Lösungen kann beispielsweise so vorgegangen werden, dass die erfindungsgemäßen Lösungen auf die zu beschichtenden Substrate gedruckt, gerakelt, gerastert oder gesprüht oder durch Tauchen aufgebracht werden. Je nach herzustellendem Artikel werden auf die so vorbehandelten Substratoberflächen eine oder mehrere haftvermittlerfreie PVC-Schichten, z.B. als Plastisole oder durch Extrusions- oder Schmelzwalzenbeschichtung oder durch Laminierung aufgebracht. Besonders bevorzugt können die erfindungsgemäßen Lösungen auch einem PVC-Plastisol vor dessen Applikation zugesetzt werden.

Die erfindungsgemäßen Lösungen werden normalerweise in solchen Mengen eingesetzt, dass, bezogen auf weichmacherfreies Polyvinylchlorid der Beschichtungsmasse 0,5 bis 2000 Gew.-%, vorzugsweise 2 bis 30 Gew.-% Isocyanurat-Polyisocyanat vorliegen. Die erfindungsgemäßen Lösungen können jedoch auch in beliebigen anderen, dem jeweiligen Anwendungsgebiet angepassten Mengen eingesetzt werden.

Die Herstellung der fertigen Schichten, also die Reaktion der NCO-Gruppen des Haftvermittlers mit dem Substrat und die Gelierung der PVC-Schicht, erfolgt unabhängig von der Art des Auftrags, nach der üblichen Weise bei höheren Temperaturen, wobei je nach Zusammensetzung der PVC-Schichten Temperaturen zwischen 130 und 210°C üblich sind.

Die erfindungsgemäßen Lösungen eignen sich als haftverbessernde Zusatzmittel für Beschichtungen auf Basis von weichgemachtem PVC, insbesondere zur Herstellung von Planen, Traglufthallen und andere textile Bauten, flexiblen Behältern, Zeltdächern, Markisen, Schutzbekleidungen, Förderbändern, Flockteppichen oder Schaumkunstleder. Besonders gut geeignet sind die erfindungsgemäßen Lösungen als haftverbessernde Zusatzmittel bei der Beschichtung von Substraten mit gegenüber Isocyanatgruppen reaktionsfähigen Gruppen, insbesondere bei der Beschichtung von Substraten auf Basis von Chemiefasern mit gegenüber Isocyanatgruppen reaktionsfähigen Gruppen.

### Beispiele:

Sofern nicht abweichend vermerkt, beziehen sich alle Prozentangaben auf Gewichtsprozent. Die Bestimmung des Isocyanatgehaltes erfolgte nach den Vorschriften der EN ISO 11909.

Als Kenndaten der Produkte wurden der Festkörpergehalt (Dickschichtmethode: Deckel, 1g Probe, 1h 125°C Konvektionsofen, Grundlage DIN EN ISO 3251), die Viskosität (Rotationsviskosimeter VT550 bei 23°C der Fa. Haake GmbH, Karlsruhe, DE) sowie der Restmonomerengehalt an TDI (Gaschromatographie, Hewlett Packard 5890 nach DIN ISO 55956) bestimmt.

### Als Eingangsstoffe wurden verwendet:

Desmodur^{®} T80: TDI-Isomerengemisch aus 80 Gew. % 2,4 TDI und 20 Gew. % 2,6 TDI, Bayer AG, Leverkusen, DE
Desmodur^{®} T65: TDI-Isomerengemisch aus 65 Gew. % 2,4 TDI und 35 Gew. % 2,6 TDI, Bayer AG, Leverkusen, DE
Adimoll^{®} DO: Di-Ethyl-2-hexyladipat, Bayer AG, Leverkusen, DE
Jayflex^{®} DINP: Diisononylphthalat, Exxon-Mobil Chemical, Houston, Texas, US
Vestinol^{®} 9 DINP: Diisononylphthalat, Oxeno Olefinchemie GmbH, Marl, DE

### Katalysator I:

### Herstellung nach DE-A 2 452 531

188 Gewichtsteile Bisphenol A wurden mit 720 Teilen einer 25 %-igen wässrigen Dimethylamin-Lösung und 425 Gewichtsteilen einer 40 %-igen Formaldehyd-Lösung für zwei Stunden auf 80°C erhitzt. Nach Erkalten wurde die organische Phase separiert und bei 90°C/10 Torr destillativ aufgearbeitet, wobei die gewünschte Mannichbase erhalten wurde.

### Vergleichsbeispiel 1:

### entspricht DE-A 30 417 32, Beispiel 17

130 g Desmodur^{®} T65 wurden bei 50°C in 390 g Dioctylphthtalat (DOP) mit insgesamt 2,2 ml eines Katalysators auf der Basis einer Mannichbase aus i-Nonylphenol, Formaldehyd und Dimethylamin entsprechend Beispiel 2 der US-B 4 115 373 trimerisiert. Nach insgesamt 370 Minuten wurde die Reaktion durch Zugabe von 1 ml einer Lösung von 1 ml Perfluorbutansulfonsäure in 2 ml Dimethylformamid unterbrochen. Man erhielt eine klare Lösung mit einem Festkörper von 24,7 %, einem NCO-Gehalt von 3,8 %, einer Viskosität von 12 000 mPas (23°C) und einem Restmonomerengehalt an freiem TDI von 0,41 %.

Dieses Beispiel zeigt, dass auf Basis von TDI-Isomerengemischen mit ≥ 35 Gew.-% 2,6-TDI das erfindungswesentliche Eigenschaftsprofil nicht erreicht werden konnte. Eine verlängerte Reaktionszeit würde hier zwar zu weiterem TDI-Umsatz (und damit niedrigeren Restmonomergehalt) führen, jedoch würden dann Viskositäten außerhalb des beanspruchten Bereichs erhalten werden.

### Vergleichsbeispiel 2:

180 g Desmodur^{®} T80 wurden bei 45°C in 414 g Adimoll^{®} DO mit insgesamt 2,2 ml des Katalysators I (30 %ige Lösung in Butylacetat/Xylol 50:50 vol:vol) trimerisiert. Nach insgesamt 300 Minuten wurde die Reaktion durch Zugabe eines Stoppers unterbrochen, da eine starke Trübung auftrat und somit kein homogenes Produkt erhalten wurde.

### Vergleichsbeispiel 3:

180 g Desmodur^{®} T80 wurden bei 45°C in 414 g Benzoflex^{®} 2088 mit insgesamt 1,8 g eines Katalysators I (30%ige Lösung in Butylacetat/Xylol 50:50 vol:vol) trimerisiert. Nach insgesamt 84 Stunden wurde die Reaktion durch Zugabe von 1,65 g para-Toluolsulfonsäuremethylester unterbrochen und bei 60 - 70°C eine Stunde nachgerührt. Es wurde eine klare Lösung mit einem NCO-Gehalt von 4,8 %, einer Viskosität von > 200 000 mPas (23°C) und einem Restmonomerengehalt an freiem TDI von 1,09 % erhalten.

Wie die Vergleichsbeispiele 2 und 3 zeigen, hat die Auswahl des Lösemittels einen entscheidenden Einfluss auf das Ergebnis der Trimerisation. So kann die gewünschte Eigenschaftskombination durch Verwendung der im Stand der Technik beschriebenen Weichmacher bzw. Lösungsmittel wie Di-Ethyl-2-hexyladipat oder Ethylenglykol-di-benzoat nicht erzielt werden.

### Erfindungsgemäße Beispiele:

### Beispiel 1:

180 g Desmodur^{®} T80 wurden bei 45°C in 489 g Jayflex^{®} DINP mit insgesamt 7,85 g eines Katalysators I (30%ige Lösung in Butylacetat/Xylol 50:50 vol:vol) trimerisiert. Nach insgesamt 84 Stunden wurde die Reaktion durch Zugabe von 4,65 g para-Toluolsulfonsäuremethylester unterbrochen und bei 60 - 70°C eine Stunde nachgerührt. Der Feststoffgehalt wurde durch Zugabe von 13,4 g DINP auf 27 % eingestellt. Es wurde eine klare Lösung mit einem NCO-Gehalt von 4,7 %, einer Viskosität von 5 700 mPas (23°C) und einem Restmonomerengehalt an freiem TDI von 0,16 % erhalten.

### Beispiel 2:

1567 g Desmodur^{®} T80 wurden bei 45°C in 3932,5 g Vestinol^{®} 9 DINP mit insgesamt 60,29 g eines Katalysators I (30%ige Lösung in Butylacetat/Xylol 50:50 vol:vol) trimerisiert. Nach insgesamt 84 Stunden wurde die Reaktion durch Zugabe von 29,95 g para-Toluolsulfonsäuremethylester unterbrochen und bei 60 - 70°C eine Stunde nach gerührt. Der Feststoffgehalt wurde durch Zugabe von 107,3 g DINP auf 28,5 % eingestellt. Es wurde eine klare Lösung mit einem NCO-Gehalt von 5,1 %, einer Viskosität von 6 100 mPas (23°C) und einem Restmonomerengehalt an freiem TDI von 0,17 % erhalten.

### Beispiel 3:

180 g Desmodur^{®} T80 wurden bei 45°C in 414,6 g Jayflex^{®} DINP mit insgesamt 4,8 g eines Katalysators I (30%ige Lösung in Butylacetat/Xylol 50:50 vol:vol) trimerisiert. Nach insgesamt 48 Stunden wurde die Reaktion durch Zugabe von 6,11 g para-Toluolsulfonsäuremethylester unterbrochen und bei 60 - 70°C eine Stunde nachgerührt. Es wurde eine klare Lösung mit einem Feststoffgehalt von 30 %, einem NCO-Gehalt von 5,61 %, einer Viskosität von 7 900 mPas (23°C) und einem Restmonomerengehalt an freiem TDI von 0,14 % erhalten.

### Beispiel 4:

285 g Desmodur^{®} T80 wurden bei 75°C in 715 g Vestinol^{®} 9 DINP mit insgesamt 7,96 g eines Katalysators I (30%ige Lösung in Butylacetat/Xylol 50:50 vol:vol) trimerisiert. Nach insgesamt 56 Stunden wurde die Reaktion durch Zugabe von 3,98 g para-Toluolsulfonsäuremethylester unterbrochen und bei 60 - 70°C eine Stunde nachgerührt. Es wurde eine klare Lösung mit einem Feststoffgehalt von 28,5 %, einem NCO-Gehalt von 4,8 %, einer Viskosität von 10 000 mPas (23°C) und einem Restmonomerengehalt an freiem TDI von 0,15 % erhalten.

### Anwendungstechnische Prüfung und Prüfergebnisse:

In einem praxisnahen Prüfsystem wurde Polyamid- oder Polyestergewebe mit einer PVC-Plastisol/Haftvermittlerbeschichtung versehen. Die Haftfestigkeit dieser Beschichtung wurde anschlie-ßend an einem normierten Teststreifen bestimmt. Dazu wurden mit einem Rakel Gewebe (Polyester oder Polyamid) mit einem haftvermittlerhaltigen Haftstrich und zwei haftvermittlerfreien Deckstrichen mit ansonsten gleicher Zusammensetzung versehen. Diese Beschichtungen wurden in einem Heizschrank ausgeliert und der weiteren Prüfung zugeführt. Bei der Prüfung der Haftfestigkeit wurden einige Zentimeter der Beschichtung von dem Gewebe abgelöst, um Beschichtung und Gewebe in die Zugmaschine einspannen zu können, die beide Schichten dann weiter auftrennte.

Die ersten Zentimeter der Beschichtung sollen sich deshalb leicht von Hand trennen lassen. Dies wurde durch einen ca. 5 cm breite Antihaftimprägnierung erreicht, die in dünner Schicht mit einem Handrakei auf einem Ende des Gewebes aufgetragen wurde.

### Zusammensetzung der Antihaftimprägnierung

| **Bestandteile** | **Menge** |
|---|---|
| Cellit^{®} 900, Bayer AG, Leverkusen, DE | 105 Gew.-T1. |
| Ethylacetat | 595 Gew.-T1. |
| Alkylsulfonsäureester | 10 Gew.-T1. |

Der Auftrag erfolgte einseitig auf der Seite des Gewebes, auf der auch der Haftstrich später aufgetragen wurde. Vor der Weiterverarbeitung wurde die Antihaft-Imprägnierung im Abzug getrocknet.

### Prüfeinrichtungen

Waage, Genauigkeit min.0,1 g
Rührer: hochtouriger Stabrührer
Umluftheizschränke, T = 140°C bzw. 175°C
Handrakel, 150 mm breit
Gummituchrakel, ca. 45 cm breit mit spitzem Rakel
Gummituchrakel, ca. 45 cm breit mit stumpfen Rakel
Polyester-Gewebe, 1100 dtex, Bindung L 1/1, Einstellung 9/9 Fd/cm
Polyamid-6,6-Gewebe: 940 dtex, Bindung L 1/1, Einstellung 8,5-9,5 Fd/cm
Für die Prüfung wurden ca. 40x 25 cm große Gewebeproben verwendet.

### Herstellung des PVC-Plastisols

| **Bestandteile** | **Menge** |
|---|---|
| Vestolit^{®} B 021 ⁽¹⁾ | 30 Gew.-Teile |
| Vestolit^{®} E 8001 ⁽²⁾ | 30 Gew.-Teile |
| Mesamoll^{® (3)} | 20 Gew.-Teile |
| Vestinol^{®} AH⁽⁴⁾ | 20 Gew.-Teile |
| Omyalite^{®} 95T ⁽⁵⁾ | 6 Gew.-Teile |
| Naftovin^{®} T90 ⁽⁶⁾ | 2 Gew.-Teile |
| Bayplast^{®} grün 8 GN ⁽⁷⁾ | 0,2 Gew.-Teile |

| | |
|---|---|
| ⁽¹⁾, ⁽²⁾: Pasten-PVC der Vestolit GmbH, Marl, DE ⁽³⁾: Weichmacher der Bayer AG, Leverkusen, DE ⁽⁴⁾ : Weichmacher der Oxeno Olefinchemie GmbH, Marl, DE ⁽⁵⁾: Calciumcarbonat der Omya Australia, Sydney, AU ⁽⁶⁾: Stabilisator, Chemson GmbH, Frankfurt, DE ⁽⁷⁾: organisches Farbpigment, Bayer AG, Leverkusen, DE | |

Die Herstellung des Plastisols erfolgte in einem Mischer der Firma Drais, Mannheim, DE durch Rühren (2,5 h) bei höchster Drehzahl und Wasserkühlung unter Vakuum.

### Haftstrich

Der Haftstrich basierend auf vorstehendem Plastisol mit variierenden Haftvermittlergehalten wurde mit einem Gummituch mit spitzem Rakel auf das jeweilige Polyester- und Polyamidgewebe (Fa. Lückenhaus, DE, Polyester-Gewebe, 1100 dtex, Bindung L 1/1, Einstellung 9/9 Fd/cm oder Polyamid-6,6-Gewebe: 940 dtex, Bindung L 1/1, Einstellung 8,5-9,5 Fd/cm) aufgebracht. Das Auflagegewicht betrug dabei ca. 100 g/m² und die Beschichtung erfolgte jeweils auf einer Fläche von ca. 30 x 20 cm. Anschließend wurden die Haftstriche durch 2 minütige Lagerung bei 140°C im Umluftheizschrank vorgeliert, bevor die Deckstriche appliziert wurden.

### Erster Deckstrich

Der erste Deckstrich basierend auf vorstehendem Plastisol wurde mit einem Gummituch mit stumpfen Rakel (Auflagegewicht ca. 850 g/m²) aufgebracht und durch Temperung bei 140°C im Heizschrank für 1 Minute vorgeliert.

### Beschichtung der Geweberückseite

Der anschließende Deckstrich auf der Rückseite der Gewebe verhinderte ein Einreißen und Ausfransen der Gewebe beim Trennen der Schichten durch die Zugmaschine. Die Beschichtung der Geweberückseite wurde mit einem Gummituch mit stumpfen Rakel (Auflagegewicht ca. 150 g/m²) aufgebracht und durch Temperung bei 140°C im Heizschrank für 1 Minute vorgeliert.

### Zweiter Deckstrich

Der zweite Deckstrich ebenfalls basierend auf dem vorstehendend beschriebenen PVC-Plastisol wurde mit einem Gummituch mit stumpfen Rakel (Auflagegewicht ca. 1400 g/m²) auf den ersten vorgelierten Deckstrich aufgebracht und durch Temperung bei 140°C im Heizschrank für 2 Minute vorgeliert.

Das Ausgelieren aller applizierten Schichten erfolgte anschließend durch 12 minütige Lagerung bei 175°C.

Aus den so hergestellten Gewebeproben wurden Prüfkörper in der Größe 5 x 26 cm ausgestanzt. Anhand dieser Proben wurden dann die Haftfestigkeiten mittels Lloyd M 5 K Zugmaschine bestimmt. Die erhaltenen Werte geben die Kraft in Newton an, die notwendig ist, um 5 cm der Beschichtung vom Trägergewebe abzulösen (Schältest). Die angegebenen Werte wurden durch Mittelung von mindestens 3 Einzelmessungen erhalten.

| **Haftvermittler aus** | **Polyestergewebe** | **Polyamidgewebe** |
|---|---|---|
| Beispiel 1 (2 % im Haftstrich) | 170 N/5cm | 191 N/5cm |
| Beispiel 1 (4 % im Haftstrich) | 181 N/5cm | 226N/5cm |
| Beispiel 1 (6% im Haftstrich) | 212 N/5cm | 225 N/5cm |
| Beispiel 2 (2 % im Haftstrich) | 176 N/5cm | 194 N/5cm |
| Beispiel 2 (4 % im Haftstrich) | 230 N/5cm | 252 N/5cm |
| Beispiel 2 (6 % im Haftstrich) | 215 N/5cm | 253 N/5cm |
| Beispiel 3 (4 % im Haftstrich) | 206 N/5cm | 230 N/5cm |

Wie die Messergebnisse zeigen liefert die Verwendung bereits von 2 % Haftvermitteler im PVC-Plastisol als Haftstrich gute Schälfestigkeitswerte. Die Haftvermittler aus den Vergleichsbeispielen 1 - 3 eigneten sich nicht zur Weiterverarbeitung, da diese entweder zu hohe Restmonomergehalte bei vorgegebenem Festkörper und Viskosität aufwiesen (Vergleichsbeispiel 1), trübe (Vergleichsbeispiel 2) oder zu hochviskos waren (Vergleichsbeispiel 3) um homogene Beschichtungen erhalten zu können.

## Patentansprüche

1. Verfahren zur Herstellung von Toluylendiisocyanat-basierenden Isocyanurat-Polyisocyanatlösungen, bei dem
A) in einem Lösungsmittel, welches mindestens einen Phthalsäuredialkylester mit verzweigten Alkylresten enthält
B) Isomerenmischungen von Toluylendiisocyanat mit < 35 Gew.-% 2,6-Toluylendiisocyanat
C) in Gegenwart eines Katalysators, der mindestens eine Stickstoffbase vom Typ einer Mannichbase enthält,
D) und in strikter Abwesenheit von aliphatischen Hydroxyl- und/oder Urethangruppenhaltigen Verbindungen
so lange trimerisiert werden, bis der Gehalt an freien nicht trimerisierten TDI-Restmonomeren ≤ 0,2 Gew.-% und gleichzeitig die Viskosität bei 23°C <20 000 mPas und der Festkörpergehalt bezogen auf das enthaltene Isocyanurat-Polyisocyanat >25 Gew.-% beträgt.

2. Verfahren zur Herstellung Toluylendiisocyanat-basierender Isocyanuratpolyisocyanatlösungen, gemäß Anspruch 1 **dadurch gekennzeichnet, dass** als Lösungsmittel in A) ausschließlich die isomeren Diisononylphthalate eingesetzt werden.

3. Verfahren zur Herstellung Toluylendiisocyanat-basierender Isocyanuratpolyisocyanatlösungen, gemäß Anspruch 1 **dadurch gekennzeichnet, dass** die in Komponente B) eingesetzten Toluylendiisocyanat-Mischungen einen Gehalt von 15-25 Gew.-% 2,6-TDI haben.

4. Toluylendiisocyanat-basierende Isocyanuratpolyisocyanatlösungen erhältlich nach dem Verfahren gemäß einem der Ansprüche 1 bis 3.

5. Verwendung der Toluylendiisocyanat-basierenden Isocyanurat-polyisocyanatlösungen gemäß Anspruch 4 als haftvermittelnde Zusätze für Polyvinylchlorid.

6. Beschichtungen erhältlich unter Verwendung der Toluylendiisocyanat-basierenden Isocyanurat-polyisocyanatlösungen gemäß Anspruch 4.

7. Substrate beschichtet mit Beschichtungen gemäß Anspruch 6.

## Claims

1. Process for preparation of tolylene-diisocyanate-based isocyanurate polyisocyanate solutions, by trimerizing
A) in a solvent which comprises at least one dialkyl phthalate having branched alkyl radicals,
B) isomer mixtures of tolylene diisocyanate with < 35% by weight of 2,6-tolylene diisocyanate
C) in the presence of a catalyst which comprises at least one nitrogen base of Mannich base type,
D) and in rigorous absence of compounds containing aliphatic hydroxy and/or urethane groups
until the content of free non-trimerized residual TDI monomers is ≤ 0.2% by weight and at the same time the viscosity at 23°C is < 20 000 mPas and the solids content, based on the isocyanurate polyisocyanate present is > 25% by weight.

2. Process for preparation of tolylene-diisocyanate-based isocyanurate polyisocyanate solutions according to Claim 1, **characterized in that** exclusively the isomeric diisononyl phthalates are used as solvent in A).

3. Process for preparation of tolylene-diisocyanate-based isocyanurate polyisocyanate solutions according to Claim 1, **characterized in that** the 2,6-TDI content of the tolylene diisocyanate mixtures used in component B) is from 15 to 25% by weight.

4. Tolylene-diisocyanate-based isocyanurate polyisocyanate solutions obtainable by the process according to any of Claims 1 to 3.

5. Use of the tolylene-diisocyanate-based isocyanurate polyisocyanate solutions according to Claim 4 as adhesion-promoting additives for polyvinyl chloride.

6. Coatings obtainable using the tolylene-diisocyanate-based isocyanurate polyisocyanate solutions according to Claim 4.

7. Substrates coated with coatings according to Claim 6.

## Revendications

1. Procédé de préparation de solutions de polyisocyanate d'isocyanurate à base de diisocyanate de toluylène, par trimérisation :
A) dans un solvant comprenant au moins un ester dialkylique d'acide phtalique renfermant des radicaux alkyle ramifiés,
B) de mélanges d'isomères de diisocyanate de toluylène avec < 35 % en poids de diisocyanate de 2,6-toluylène,
C) en présence d'un catalyseur comprenant au moins une base azotée du type base de Mannich,
D) et en la stricte absence de composés aliphatiques renfermant des groupes hydroxyle et/ou uréthane,
jusqu'à ce que la teneur en monomères résiduels TDI libres non trimérisés soit ≤ 0,2 % en poids et qu'en même temps la viscosité à 23°C soit < 20 000 mPas, et la teneur en matières solides, par rapport au polyisocyanate d'isocyanurate présent soit > 25 % en poids.

2. Procédé de préparation de solutions de polyisocyanate d'isocyanurate à base de diisocyanate de toluylène selon la revendication 1, **caractérisé en ce que** l'on utilise exclusivement les phtalates de diisononyle isomères en tant que solvant dans A).

3. Procédé de préparation de solutions de polyisocyanate d'isocyanurate à base de diisocyanate de toluylène selon la revendication 1, **caractérisé en ce que** les mélanges de diisocyanate de toluylène utilisés dans le composant B) présentent une teneur en 2,6-TDI de 15 à 25 % en poids.

4. Solutions de polyisocyanate d'isocyanurate à base de diisocyanate de toluylène pouvant être obtenues conformément au procédé selon l'une quelconque des revendications 1 à 3.

5. Utilisation des solutions de polyisocyanate d'isocyanurate à base de diisocyanate de toluylène selon la revendication 4, en tant qu'additifs promoteurs de l'adhésion pour du polychlorure de vinyle.

6. Revêtements pouvant être obtenus en utilisant les solutions de polyisocyanate d'isocyanurate à base de diisocyanate de toluylène selon la revendication 4.

7. Substrats revêtus avec des revêtements selon la revendication 6.
